# EUROPÄISCHE PATENTANMELDUNG

(11) **EP 0 716 408 A2**
(43) Veröffentlichungstag der Anmeldung: **12.06.1996**
(21) Anmeldenummer: 95119198.0
(22) Anmeldetag: 06.12.1995
(51) Int. Cl.: G10K 11/16, B62D 25/16

(54) **Vorrichtung zur Verminderung des Reifen/Fahrbahngeräusches**

(30) Priorität: 08.12.1994 DE 4443678
(71) Anmelder: Continental Aktiengesellschaft, D-30165 Hannover (DE)
(72) Erfinder: Dodt, Thomas, Dr., D-30455 Hannover (DE)

(57) **Zusammenfassung**

Eine Vorrichtung zur Verminderung eines von einem fahrenden Kraftfahrzeug verursachten Reifen/Fahrbahngeräusches weist eine an sich bekannte Spritzwasserschutzauskleidung (3) im Radkasten (2) und/oder am Radksten (2) befestigten Spritzschutzlappen (41) auf. Die Spritzwasserschutzauskleidung (3) besteht aus einem Verbundschichtaufbau, der mindestens eine Schicht (17) zur Schallabsorption und mindestens eine Schicht (11) zur Sprühnebelverminderung enthält.

## Beschreibung

Die Erfindung betrifft eine Vorrichtung zur Verminderung eines von einem fahrenden Kraftfahrzeug verursachten Reifen/Fahrbahngeräusches.

Das Reifen/Fahrbahngeräusch eines fahrenden Kraftfahrzeuges stellt eine Lärmquelle dar. Die hauptsächliche Abstrahlung von Schalleistung erfolgt bei Pkw-Reifen in einem Frequenzbereich von ca. 500 bis 2000 Hz, bei Lkw-Reifen in einem Frequenzbereich von ca. 400 bis 1200 Hz.

Aus der DE-OS 30 20 849 ist es bekannt, mitrotierende Schallschirme an Autoreifen anzubringen. Die Wirkung des Schallschirmes hängt von der geometrischen Höhe des Schirmes ab. Je größer der dem Schallstrahl über die Schirmkante aufgezwungene Umweg ist, desto größer ist auch die Lärmreduktion. Bei einer Anordnung eines Schallschirmes ist es bekannt, an der Schirmkante Resonatoren, insbesondere Helmholtz-Resonatoren anzubringen.

Das Anbringen von separaten Schallschirmen ist technisch aufwendig. Beim Befahren von Bordsteinen besteht außerdem eine Beschädigungsgefahr dieser Schallschirme. Die Schallschirme führen insgesamt zu einem breiteren Radstand. Außerdem stellen sie ungefederte Massen dar, die speziell ausgewuchtet werden müssen.

Aus der DE 42 41 518 C1 ist eine im Radgehäuse eines Kraftfahrzeuges befestigte Umkleidung bekannt, die als ein doppelwandiges und formstabiles Flächengebilde ausgestaltet ist und die ein System von Helmholtz-Resonatoren aufweist. Diese bekannte Vorrichtung wirkt als passiver Schallabsorber und umfaßt eine Außenhülle, die dem Rad zugewandt ist, und eine dem Radkasten zugewandte Rückwand. Die Wände des Flächengebildes bestehen aus zwei formstabilen und somit starren Folien. Die dem Rad zugewandte Folie ist der Gefahr der Verschmutzung bzw. der Anlagerung von Schmutz, einfrierendem Wasser und auch Schnee ausgesetzt. Dadurch kann die gesamte Vorrichtung ihre Wirksamkeit als Schallabsorber verlieren. Die dem Rad zugewandte Folie ist dreimal dicker ausgebildet als die dem Rad abgewandte Folie. Durch diese Dickenänderung soll die Haltbarkeit des gesamten Schallabsorptionsbauteils verlängert werden. Eine Veränderung der Wirkung ist damit nicht gegeben.

Es hat sich in durchgeführten Schallfelduntersuchungen gezeigt, daß die Schallabsorption dieser Vorrichtung nicht ausreichend ist. Dieses wird darauf zurückgeführt, daß die Vorrichtung nicht im Nahfeld der Hauptschallquelle wirksam wird.

Der Erfindung liegt die Aufgabe zugrunde, das von einem Kraftfahrzeug emittierte Reifen/Fahrbahngeräusch mit geringerem technischen Aufwand wesentlich zu verringern.

Die Aufgabe wird durch die im Kennzeichen des Anspruchs 1 genannten Merkmale gelöst. Das in unmittelbarer Nähe des abrollenden Reifens vorhandene Spritzwasserschutzsystem wird mit einer wirkungsvollen Maßnahme zur Schallabsorption ausgestattet. Die abgestrahlte Schallenergie wird zu einem wesentlichen Teil absorbiert, wodurch der Lärmpegel im Fernfeld vermindert wird.Dabei wird vorteilhaft davon Gebrauch gemacht, daß Spritzschutzvorrichtungen an Kraftfahrzeugen gemäß den EWG-Richtlinien sehr tief Richtung Fahrbahn heruntergezogen ausgebildet sein müssen. Nach den EWG-Richtlinien müssen Spritzschutzvorrichtungen bis zu einem Fahrbahnabstand von maximal 200 mm heruntergezogen sein.

Unter einem Spritzwasserschutzsystem werden gemäß der EWG-Richtlinie 91/226/EWG vom 27.3.1991 Vorrichtungen verstanden, die dazu bestimmt sind, die Zerstäubung von durch die sich drehenden Fahrzeugreifen hochgeschleudertem Wasser zu verhindern. Das Spritzschutzsystem besteht je nach Fall aus Radabdeckung, Schmutzfänger und Schürze mit einer Spritzschutzvorrichtung. Durch das Spritzschutzsystem sollen 70 % des aufgewirbelten Wassers gezielt abgeführt werden. Dabei wird das auftretende Wasser an der Spritzschutzeinrichtung zur Ruhe gebracht und gesammelt abgeführt. Diese Wirkung hat der Gegenstand der DE 42 41 518 C1 nicht aufzuweisen, der zum Rad hin eine glatte Oberfläche aufweist. Dadurch ist bei einer Beaufschlagung mit Wasser keinerlei Absorbierung der Wasserenergie möglich. Eine Sprühnebelreduzierung ist nicht Gegenstand der DE 42 41 518 C1.

In vorteilhafter Weise weist gemäß Anspruch 2 die Spritzwasserschutzauskleidung eine äußere Spritzschutzschicht oder Spritzschutzplatte auf, die schalldurchlässig ausgebildet ist und die schallabsorbierende Schicht oder das schallabsorbierende Bauteil abdeckt. Die erste Schicht verzehrt durch ihre spezielle Spritzschutzausbildung, z.B. rasterartige Vertiefungen mit schrägen Wänden, einerseits die Energie des aufgewirbelten Wassers und ist andererseites schalldurchlässig ausgebildet. Dabei ist sie so stabil ausgelegt, daß die hinterliegenden Schichten, insbesondere die Schallabsorptionsschicht, aufgrund von hochgeschleuderten Steinen, Regen, Schnee und Eis nicht beschädigt werden. Die zweite Schicht hat die Aufgabe, denauftreffenden Schall zu absorbieren.

In vorteilhafter Ausgestaltung der Erfindung besteht die schallabsorbierende Schicht aus einer Absorber-Matte, die auf einer eine Rückwand des Verbundschichtaufbaus darstellenden Trägerplatte oder Trägerschicht befestigt ist. Die Absorbermatte kann aus einem offenporigen Weichschaum, feiner Metallwolle, porösen oder porosierten Mineralen wie stark aufgeschäumte Glasschäume bestehen. Vorteilhafterweise wird die der Einstrahlung zugewandte Fläche der Absorbermatte von einer dünnen, schalldurchlässigen Schutzschicht abgedeckt.

In weiterer vorteilhafter Ausgestaltung der Erfindung weist das schallabsorbierende Bauteil Resonatoren und/oder Membranabsorber auf. Als Resonatoren können beispielsweise Helmholtz-Resonatoren verwendet werden. Die Resonatoren können auf verschiedene Frequenzen abgestuft eingesetzt werden.

Die Spritzschutzschicht kann aus einem hervorstehenden Geflecht aus Kunststoff oder Metalldrähten bestehen.

Weiter ist es von Vorteil, daß die Spritzschutzschicht zweiteilig ausgebildet ist, wobei der eine Teil ein hervorstehendes Geflecht ist, das auf seiner Außenseite von einer offenporigen Spritzschutzplatte als zweitem Teil abgedeckt ist.

Bildet die Rückwand der Spritzschutzschicht oder Spritzschutzplatte die Vorderseite des Resonatoren aufweisenden schallabsorbierenden Bauteils, wird die Produktionsmöglichkeit eines solchen Systems erheblich vereinfacht. Die Spritzschutzschicht oder -platte kann extrudiert oder als Tiefziehteil hergestellt werden. Das Radhaus kann mit Anlenkpunkten und Stegen in konventioneller Technik hergestellt werden. Beide Teile werden mittels einer geeigneten mechanischen Verbindung zusammengesteckt und bilden das System Radhaus mit Spritzschutz und Schallschutz.

Weisen die zur Fahrbahn gerichteten Unterseiten der Resonatoren Öffnungen auf, kann einerseits eingedrungenes Wasser abgeleitet werden und andererseits können die Resonatoren über diese Öffnungen für streifenden Schalleinfall wirken.

Eine vorteilhafte Ausgestaltung der Erfindung wird im Anspruch 9 gekennzeichnet. Die Zusatzresonatoren an der Unterseite wirken für streifenden Schalleinfall.

In vorteilhafter Ausgestaltung der Erfindung sind die Schallabsorber für den Einsatz bei Personenkraftwagen auf einen Frequenzbereich von 500 Hz bis 2000 Hz und für den Einsatz bei Nutzfahrzeugen auf einen Frequenzbereich von 400 Hz bis 1200 Hz abgestimmt. Durch diese Beschränkung auf einen relevanten wesentlich wirksamen Frequenzbereich wird ein optimaler Flächenverbrauch der zur Verfügung stehenden Anordnungsfläche für die Resonatoren erreicht.

Durch die Erfindung werden in vorteilhafter Weise die lärmreduzierenden Maßnahmen hinsichtlich des Reifen/Fahrbahngeräusches in die Spritzwasserschutzvorrichtung des Kraftfahrzeuges integriert. Mit einem technischen Bauteil werden somit zwei verschiedene technische Effekte erreicht. Außerdem ist die Schallabsorptionsvorrichtung durch die akustisch durchlässige Spritzschutzvorrichtung geschützt angeordnet und nicht der Umgebung ausgesetzt.
Erst durch die Einbeziehung der Spritzwasserschutzeinrichtung ist die Möglichkeit vorhanden, die schallabsorbierenden Bauteile hinreichend nahe an der Hauptschallquelle des Reifens, der Bodenaufstandsfläche, zu positionieren. Dadurch ist eine Schallabsorptionsvorrichtung in ihrer Anordnung geschaffen, die auf die realen Schallfelder in der Umgebung des Reifens besser abgestimmt ist.

Anhand der Zeichnung werden nachstehend vier Ausführungsbeispiele der Erfindung näher erläutert. Es zeigt
- Fig. 1: in schematischer Darstellung die Ausbildung eines Radkastens mit einer Spritzwasserschutzauskleidung,
- Fig. 2: einen Verbundschichtaufbau einer Spritzwasserschutzauskleidung mit einer Schallabsorptionsschicht,
- Fig. 3: die als offenporige Spritzschutzplatte ausgebildete, dem Spritzwasser ausgesetzte Schicht des Verbundschichtaufbaus gemäß Fig. 1 in Draufsicht,
- Fig. 4: einen Verbundschichtaufbau mit einem hervorstehenden Geflecht von stabilen Kunststoffäden auf der Schallabsorptionsschicht,
- Fig. 5: einen Verbundschichtaufbau mit einer zweiteiligen Spritzschutzschicht,
- Fig. 6: einen Verbundschichtaufbau einer Spritzwasserschutzauskleidung mit einem Schallabsorptionssystem in Form von Resonatoren,
- Fig. 7: eine Spritzwasserschutzauskleidung mit einem Resonatoren aufweisenden schallabsorbierenden Bauteil,
- Fig. 8: in schematischer Darstellung die Resonatoren des schallabsorbierenden Bauteiles mit unterer Ablaßöffnung,
- Fig. 9: das schallabsorbierende Bauteil mit Resonatoren und unteren Zusatzresonatoren.

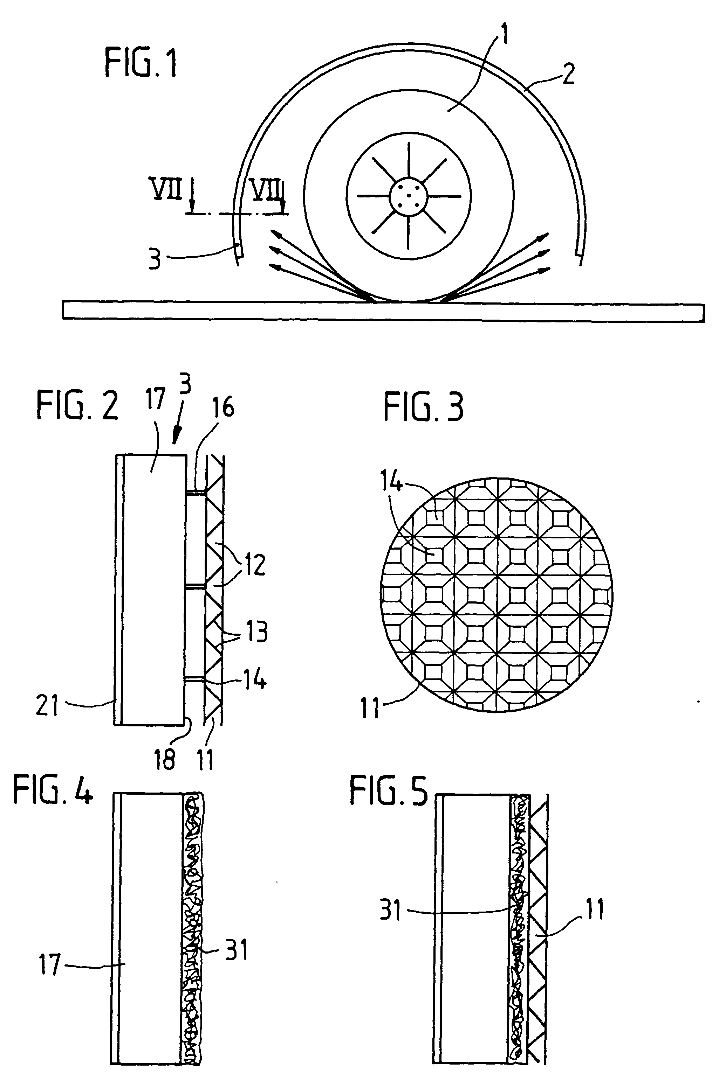

In Fig. 1 wird schematisch ein Rad 1 eines Kraftfahrzeuges in Seitenansicht mit dem darüber angeordneten Radkasten 2 dargestellt. Die hauptsächlichen Abstrahlrichtungen des Reifen/Fahrbahngeräusches sind durch Pfeilbündel angedeutet. Im Inneren des Radkastens 2 ist eine Spritzwasserschutzausauskleidung 3 angebracht, die einen später noch erläuterten Verbundschichtaufbau aufweist.

Die in Fig. 2 in geschnittener Seitenansicht gezeigte Spritzwasserschutzauskleidung 3, die im Radkasten 2 oder auf einem hinter dem Reifen 1 hängenden, hier nicht gezeigten Spritzschutzlappen angeordnet ist, weist einen Verbundschichtaufbau auf. Die oberste Schicht ist eine hinreichend stabile Spritzschutzplatte 11, die den Sprühnebel vermindern, hochgeschleuderte Steine bremsen und die nachfolgenden Schichten vor mechanischer Beschädigung, z. B. durch Steinschlag schützen soll. Diese schlagfeste Spritzschutzplatte 11 ist schalldurchlässig ausgeführt. Sie weist ein gleichmäßiges Raster (Fig. 3) von Vertiefungen 12 mit geneigten Wänden 13 auf. Dabei ist der Boden 14 der jeweiligen Vertiefung 12 offen. Die hier gezeigte Ausbildung ist nur ein Ausführungsbeispiel. Die gleiche Wirkung kann auch mit einer ähnlichen symmetrischen oder nichtsymmetrischen geometrischen Ausgestaltung erreicht werden.

Die Spritzschutzplatte 11 ist über Stege 16 mit den übrigen Verbundschichten beabstandet verbunden. Die zweite Schicht 17 ist eine Schallabsorptionsschicht aus einer porösen Schaumstoffmatte, die beispielsweise ein offenporiger Kunststoffschaum aus Polyester, Polyäther oder Polyurethan ist. Die Absorbermatte 17 ist von einer schalldurchlässigen, dünnen Schutzschicht 18 abgedeckt, so daß durch die Spritzschutzplatte 11 tretendes Wasser von der Absorbermatte 17 ferngehalten wird.

Die dritte Schicht 21 des Verbundschichtaufbaus stellt eine Rückwand dar, die aus einem polymeren Material oder einem metallischen Werkstoff gebildet ist. Diese dritte Schicht 21 gibt dem gesamten Verbundschichtaufbau die nötige mechanische Festigkeit und bildet die Anlenkpunkte für die Befestigung im Radhaus 2 des Fahrzeuges oder auf dem Spritzschutzlappen.

Der Verbundschichtaufbau gemäß Fig. 4 weist als äußere Spritzschutzschicht ein hervorstehendes Geflecht 31 auf. Es ist auch möglich, teppichartigen Vlies, Kurzfasern, offene Gewebe, Gewirke oder Borsten anzuwenden. Das Geflecht 31 ist direkt mit der Schallabsorptionsschicht 17 verbunden und so stabil ausgelegt, daß die hinterliegende Schallabsorptionsschicht 17 nicht beschädigt wird.

In der Ausbildung eines Verbundschichtaufbaues gemäß Fig. 5 besteht die äußere Spritzschutzschicht aus zwei Teilen, und zwar einem sehr offenen Kunststoffgeflecht 31 und einer darüber angeordneten Spritzschutzplatte 11 aus schlagfestem Kunststoff.

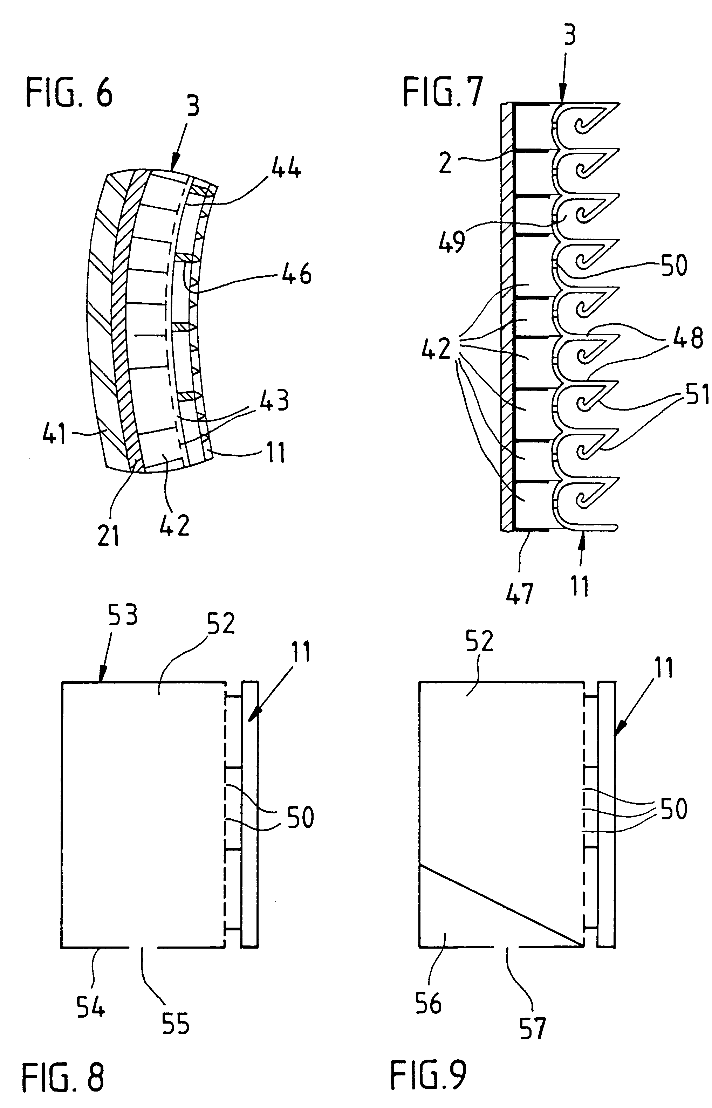

Der Verbundschichtaufbau der Spritzwasserschutzauskleidung 3 gem. Fig. 6 ist auf dem elastomeren Werkstoff eines Radhauses oder Spritzschutzlappens 41 angeordnet. Die Rückwand 21 aus einem Kunststoff oder Metall trägt ein Schallabsorptionssystem 42 aus Resonatoren, deren Öffnungen 43 von einer schalldurchlässigen Schutzschicht 44 abgedeckt sind. In einer weiteren Ausführung bildet das Radhaus oder der Spritzschutzlappen 41 selber die Rückseite 21 der Resonatoren. Über Stege 46 ist eine äußere Spritzschutzplatte 11 dem übrigen Verbundschichtaufbau beabstandet vorgeordnet. Diese Spritzschutzplatte 11 ist schalldurchlässig ausgeführt und bietet einen Schutz gegen mechanische Beanspruchung wie z. B. Steinschlag.Der Verbundschichtaufbau gemäß Fig. 7 weist ein aus nebeneinander angeordneten Resonatoren 42 bestehendes schallabsorbierendes Bauteil 47 auf. Die darüberliegende Spritzschutzschicht 11 besteht aus einer extrudierten Platte mit nebeneinander angeordneten Stegen 48. In dem Boden zwischen den Stegen 48 sind in Abständen Öffnungen, z. B. Bohrungen oder Schlitze 50 eingebracht, die zusammen mit dem rückwärtigen Volumen, die Resonatoren 42 bilden. Die Rückwand der Spritzschutzschicht 11 ist also so gestaltet, daß sie gleichzeitig die Vorderseite des schallabsorbierenden Bauteils 43 bildet. Von den Stegspitzen erstreckt sich jeweils eine schräg nach innen verlaufende Ableitfläche 51, die die Öffnungen 50 der Resonatoren 42 überdecken.

In Fig. 8 wird in schematischer Darstellung ein hinter der Spritzschutzschicht 11 liegende Resonatoranordnung 53 gezeigt, wobei der jeweilige Resonator 52 in der zur Fahrbahn weisenden Unterseite 54 mit mindestens einer Öffnung 55 versehen ist, durch die einerseits über die Resonatoröffnungen 50 eingedrungenes Wasser abgeleitet werden kann und die andererseits als Resonator für streifenden Schalleinfall wirkt. Gemäß der Ausbildung in Fig. 9 können an der Unterseite der Resonatoren 52 Zusatzresonatoren 56 gesondert und getrennt von den Resonatoren 52 angeordnet sein.

## Patentansprüche

1. Vorrichtung zur Verminderung eines von einem fahrenden Kraftfahrzeug verursachten Reifen/Fahrbahngeräusches,
**dadurch gekennzeichnet**,
daß die Vorrichtung eine an sich bekannte Spritzwasserschutzauskleidung (3) im Radkasten (2) oder an dem am Radkasten hängend befestigten Spritzschutzlappen (41) aufweist, die aus einem Verbundschichtaufbau besteht, der eine Schicht (17) oder ein Bauteil (42, 47, 53) zur Schallabsorption enthält.

2. Vorrichtung nach Anspruch 1, dadurch gekennzeichnet, daß die Spritzwasserschutzauskleidung (3) eine äußere, mechanisch hinreichend stabile Spritzschutzschicht (31) oder -platte (11) aufweist, die schalldurchlässig ausgebildet ist und die schallabsorbierende Schicht (17) oder das schallabsorbierende Bauteil (42, 47, 53) abdeckt.

3. Vorrichtung nach Anspruch 1 oder 2, dadurch gekennzeichnet, daß die schallabsorbierende Schicht (17) aus einer Absorbermatte, insbesondere einer offenporigen Kunststoffschaummatte besteht, die auf einer eine Rückwand (21) des Verbundschichtaufbaus darstellenden Trägerplatte oder -schicht oder direkt auf dem Radkasten (2) oder Spritzschutzlappen (41) befestigt ist.

4. Vorrichtung nach Anspruch 1 oder 2, dadurch gekennzeichnet, daß das schallabsorbierende Bauteil (42, 47, 53) ein oder mehrere Resonatoren und/oder Membranabsorber aufweist.

5. Vorrichtung nach einem der Ansprüche 1 bis 4, dadurch gekennzeichnet, daß die äußere Spritzschutzschicht ein räumlich ausgedehntes Geflecht (31), Gewebe, Gewirke oder Vlies aus Kunststoff oder Metalldrähten ist.

6. Vorrichtung nach einem der Ansprüche 1 bis 5, dadurch gekennzeichnet, daß die Spritzschutzschicht (11, 31) zweiteilig ausgebildet ist, wobei der eine Teil ein räumlich ausgedehntes Geflecht (31), Gewebe, Gewirke oder Vlies ist, das auf seiner Außenfläche von dem zweiten Teil in Form einer offenporigen Spritzschutzplatte (11) abgedeckt ist.

7. Vorrichtung nach Anspruch 2, dadurch gekennzeichnet, daß die Rückwand der Spritzschutzschicht oder Spritzschutzplatte (11) die Vorderseite des über- und/oder mehrere nebeneinanderliegende Resonatoren (42) aufweisenden schallabsorbierenden Bauteils (43) bildet.

8. Vorrichtung nach Anspruch 4, dadurch gekennzeichnet, daß die zur Fahrbahn weisende Unterseite (54) der Resonatoren (52) Öffnungen (55) aufweisen.

9. Vorrichtung nach Anspruch 4, dadurch gekennzeichnet, daß die Resonatoren (52) über die Reifenbreite gesehen über- und/oder nebeneinander angeordnet sind und an ihrer zur Fahrbahn gerichteten Unterseite mit Zusatzresonatoren (56) versehen sind, deren Einfallöffnungen (57) zu den Einfallöffnungen (50) der tragenden Resonatoren (52) richtungsmäßig versetzt sind.

10. Vorrichtung nach einem der Ansprüche 1 bis 9, dadurch gekennzeichnet,
daß die Schallabsorber (17, 42, 47, 53) für den Einsatz bei Personenkraftwagen auf einen Frequenzbereich von 500 bis 2000 Hz und für den Einsatz bei Nutzfahrzeugen auf einen Frequenzbereich von 400 bis 1200 Hz abgestimmt sind.
